# EUROPEAN PATENT SPECIFICATION

(11) **EP 0 553 007 B1**
(45) Date of publication and mention of the grant of the patent: **27.05.1998**
(21) Application number: 93400093.6
(22) Date of filing: 15.01.1993
(51) Int. Cl.: C08F 299/00, B29C 33/06, C08F 220/36

(54) **Molding resins and uv-transparent molds made therefrom**
Pressharze sowie daraus hergestellte für UV-Strahlung transparente Pressformen
Résines à mouler et moules transparents pour des radiations UV préparés à partir de celles-ci

(30) Priority: 22.01.1992 US 823830
(43) Date of publication of application: 28.07.1993
(73) Proprietor: COOK COMPOSITES AND POLYMERS, Port Washington, WI 53074 (US)
(72) Inventor: Boeckeler, Rudoph Henry, Grafton, Wisconsin 53024 (US)
(74) Representative: Jolly, Jean-Pierre

(56) References cited:
- EP-A- 0 051 476
- EP-A- 0 064 809
- EP-A- 0 151 990
- DE-A- 2 362 838
- US-A- 4 073 835
- DATABASE WPIL Week 9005, Derwent Publications Ltd., London, GB; AN 90-032272

## Description

The invention relates to molding resins. In one aspect, the invention relates to molding resins that upon cure are transparent to ultraviolet light or radiation while in another aspect, the invention relates to molds made from these resins. In yet another aspect, the invention relates to using the UV-tranparent molds to shape fiber preforms in which a UV-curable composition is used as the preform binder.

The process of making fiber preforms is greatly enhanced by using UV-curable binders rather than heat-curable binders. The former generally operates at ambient temperature and generates only a small amount of heat. The latter, by its very nature, requires elevated temperatures, often in excess of 300°C, and thus generates a significant amount of heat . As such, processes using heat-curable binders generally generate significantly greater quantities of volatile organic compound emissions, consume significantly greater amounts of energy, and require significantly longer periods of time to rigidize the preform, than processes using UV-curable binders.

However, processes using UV-curable binders generally require a UV-transparent mold or forming tool to hold the fiber reinforcement in place while the binder is curing. As here used, "UV-transparent" means that the mold or forming tool transmits or conducts sufficient UV radiation or light to rapidly cure the UV-curable binder. In addition to being UV-transparent, important properties of the material used in construction of the mold are formability and strength. The materials are desirably easily shaped into the geometry of the mold, and are sufficiently strong to withstand the pressures required to shape the fibers placed against their surface.

Furthermore, the mold should withstand the heat generated by the source of the UV light, e.g. a UV lamp (many UV lamps also generate infrared radiation, and thus heat), and should be resistant to photodegradiation from exposure to the UV radiation used to cure the preform binder.

While many common glasses are clear, and thermoformable plastics have some of the desired properties, each of these materials is lacking in certain essential characteristics. For example, glass efficiently transmits UV radiation in the range of 330 nm to 400 nm, but fractures easily and is very difficult to form. Some thermoplastic materials, such as polycarbonate and polystyrene, can be easily formed but absorb quite strongly in the 330 to 400 nm range. Some acrylic thermoplastics have good UV transmission properties but are difficult to form, while other grades form quite well but absorb strongly any UV radiation below 370 nm. While many thermoplastic materials can be machine shaped, this process is time consuming and results in a large amount of material waste. Furthermore, many thermoplastic materials distort from the heat generated by UV lamps, or degrade upon exposure to UV radiation.

The documents EP-A-64809 and EP-A-151990 propose a method of producing moulded plastic products by in-mould copolymerisation of methyl methacrylate with a polyurethane polyacrylate or polymethacrylate derived from a hydroxyalkyl acrylate or methacrylate by reaction of hydroxyl groups thereof with the isocyanate groups of a polyisocyanate or urethane polyisocyanate having isocyanate functionality greater than 2.0.

The document EP-A-51476 relates to a polyurethane liquid polymer composition comprising a urethane oligomer and a heat-activated free-radical-generating catalyst, wherein the urethane oligomer has a final free NCO content from 0% to 20% and has been prepared by reacting
(a) an isocyanate-terminated prepolymer having a final free NCO content ranging from 0.5% to 30% and that is the product of reacting an organic polyisocyanate with a polyol having an average equivalent weight in the range 75 to 500 and an average functionality of at least 3, with
(b) an isocyanate-reactive-group-containing unsaturated acrylate or unsaturated amide monomer.

The document JP-A-1308417 relates to resin compositions comprising
(a) urethane (meth)acrylate obtained by reacting (1) diisocyanates, (2) dihydroxy compounds, and (3) (meth)acrylates containing OH groups in (4) radical polymerisable vinyl compounds,
(b) organic peroxides or other radical polymerisation initiators
(c) (meth) acrylate containing OH groups, and
(d) peeling agents.

In column 3, lines 12-60 of the document US 4 073 835 are disclosed liquid resin compositions which may be crosslinked or cured under the action of firstly ultraviolet rays, and secondly heat, and which include as the essential components at least one known ethylenically unsaturated monomer and/or prepolymer, a photopolymerization initiator and thermopolymerization initiator and may further include various additives such as fire retardant, filler and pigment.

It is one object of the invention to provide a UV transparent mold which is made from a resin comprising in weight percent based on the total weight of the resin :
- at least 25% of a urethane acrylate;
- at least 20% of an alpha, beta-ethylenically unsaturated monomer ; and
- a catalytic amount of a peroxyde initiator.

Compositions made up of this resin can be molded directly into the desired shape, or they can be molded into a preliminary shape which is subsequently thermoformed or machined into the desired shape. The molds made from these compositions are not only UV-transparent, but they are also tough, durable and can possess any number of other desirable properties depending upon their particular formulation. The molds are useful as shaping tools in the manufacture of preforms in which the preform binder is curable by UV radiation.

The urethane acrylates used as component (A) are peroxide-curable urethane monomers (oligomers) that are essentially fully reacted urethane monomers that contain vinyl unsaturation. Certain of these monomers are described in US-A-3,297,745 and can be prepared by reacting an organic diisocyanate with an ethylenically unsaturated alcohol having the formula 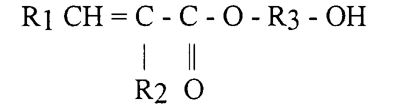 wherein
R₁ is selected from a hydrogen atom, a methyl group and a benzyl group,
R₂ is selected from a hydrogen atom and a methyl group
R₃ is selected from alkylene groups.

These urethane acrylates are soluble in vinyl monomers, are cured by way of a free radical mechanism, and are free of isocyanate residuals.

The urethane acrylates of this invention include diacrylates and triacrylates, and are the reaction products of aliphatic or aromatic diisocyanate and polyhydroxyl containing monomers, such as diols, glycols, and polyols. For example, they comprise the reaction product of
A) at least one organic polyisocyanate compound ;
B) at least one alpha, beta-ethylenically unsaturated alcohol represented by the formula 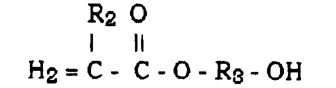 where R₂ is H or CH₃,
   and R₃ is an alkylene group or a residue from a caprolactone ; and
C) at least one polyhydric alcohol like a glycol and/or a polyhydroxy polymer.

The organic polyisocyanate which may be used as compound (A) may have two, three and up to six reactive isocyanate groups. Such a compound having two reactive groups may be represented by the OCN - R₁ - NCO where R₁ is an inertly-substituted or unsubstituted divalent aliphatic, cycloaliphatic or aromatic radical of at least four carbon atoms ;

Because aromatic radicals absorb more UV radiation than aliphatic or cycloaliphatic radicals, R₁ is preferably one of the latter. By "inertly-substituted" is meant that the substituents, if any, on the divalent radical are, with the exception of alpha, beta-ethylenical unsaturation, essentially nonreactive with the alpha, beta-ethylenically unsaturated alcohol or the glycol or polyhydroxy polymer at reaction conditions.

Suitable polyisocyanate compounds include tolylene-2,4-diisocyanate ; 2,2,4-trimethylhexamethylene-1,6-diisocyanate ; hexamethylene-1,6-diisocyanate ; diphenylmethane-4,4'-diisocyanate ; m-phenylene diisocyanate ; p-phenylene diisocyanate ; 2,6-tolylene diisocyanate ; 1,4-cyclohexamethylene dimethyl diisocyanate ; xylylene-1,4-diisocyanate ; xylylene-1,3-diisocyanate, isophorone diisocyanate ; 4,4'-methylene-bis (cyclohexyl isocyanate) ; the reaction product of one of the aforesaid polyisocyanates with a polyamine or a low molecular weight polyol such as an alkylene glycol ; and uretonimines obtained by heating one of the aforesaid polyisocyanates at an elevated temperature in the presence of a phosphorus catalyst in order to obtain a polycarbodiinide and then by reacting the latter with another isocyanate group such as disclosed in US-A-4.014.935.

Examples of alpha, beta-ethylenically unsaturated alcohols which may be employed as compound (B) include 2-hydroxyethyl acrylate and methacrylate; 3-hydroxypropyl acrylate and methacrylate ; 4-hydroxybutyl acrylate and methacrylate ; partial acrylic and methacrylic esters of polyhydroxy compounds such as monoacrylates and monomethacrylates of ethylene glycol, 1,2-propylene glycol, 1,3-propylene glycol, 1,4-butylene glycol, 1,6-hexamethylene glycol, diethylene glycol, triethylene glycol, dipropylene glycol, glycerol monoacrylate and monomethacrylate, pentaerythritol monoacrylate and monomethacrylate ; acrylate or methacrylate-capped caprolactone alcohols or polyols ; and acrylate or methacrylate-capped polycaprolactone derivatives such as disclosed in US-A-3.700.643.

The polyhydric alcohols which may be used as compound (C) include saturated aliphatic diols, polymeric polyalkylene oxide polyols, saturated polyhydroxy polyesters, and alpha, beta-unsaturated polyhydroxy polyesters such as 1,4-butane diol ; ethylene glycol ; propylene glycol; 1,3-butane diol; pentane diol ; hexane diol ; neopentyl glycol ; polyethylene glycols ; polytetramethylene glycols ; polycaprolactone diols and triols ; and polyester diols and triols.

Representative urethane acrylates of this invention are the reaction products of four moles of isophorone diisocyanate or dicyclohexyl-4,4'-methane diisocyanate, two moles of 1,4-butane diol, one mole of diethylene glycol adipate ester diol or polytetramethylene ether glycol (with an average molecular weight of 2,000), and one mole of caprolactone methacrylate or 2-hydroxyethylmethacrylate.

Any alpha, beta-ethylenically unsaturated monomer, or mixture of monomers, which acts as a reactive diluent for the urethane acrylate can be used in the practice of this invention These compounds include mono- and polyacrylates, mono- and polymethacrylates, vinyl compounds, acrylamides and methacrylamides, and allylic compounds such as ethylene glycol dimethacrylate and diarylate, 1,6-hexanediol diacrylate and dimethacrylate, trimethylolpropane triacrylate, caprolactone acrylate, 2-hydroxyl ethyl methacrylate, methylmethacrylate, ethyl acrylate N-vinyl-2-pyrrolidone, styrene, vinyl toluene, alpha-methyl styrene, acrylamide, acrylonitrile, 2-ethyl hexyl methacrylate, diallyl phtalate, and cyclohexyl methacrylate.

The preferred alpha, beta-ethylenically unsaturated monomers of this invention are styrene and methyl methacrylate.

The peroxide free radical initiators or catalysts which are useful in a practice of this invention have half-lives of less than three hours at reaction temperature and include acyl peroxides, such as benzoyl peroxide ; diallyl or aralkyl peroxides such as di-t-butyl peroxide, dicumyl peroxide, cumylbutyl peroxide, 1,1-di-t-butyl peroxy 3,5,5-trimethylcyclohexane, 2,5-dimethyl-2,5-di-t-butyl peroxy hexane and bis (alpha-t-butyl peroxyisopropylbenzene); peroxyesters such as t-butyl peroxypivalate, t-butyl peroctoate, t-butyl perbenzoate, 2,5-dimethylhexyl-2,5-di (perbenzoate), dialkylperoxymonocarbonates and peroxydicarbonates ; hydroperoxides such as t-butyl hydroperoxide, p-methane hydroperoxide, pentane hydroperoxide and cumene hydroperoxide ; and ketone peroxides such as cyclohexanone peroxide and methyl ethyl ketone peroxide. These peroxides can be used alone or in combination with one another or in combination with a co-catalyst such as N,N-dimethyl-p-toluidine, N,N-dimethylaniline, N-N-diethylaniline, 2,4-pentanedione, and N,N-dimethylacetaniline, as well as metal salts such as octoates and naphtenates of cobalt, manganese, vanadium, potassium, zinc, and copper. Co-catalysts are generally used in conjunction with initiators that cure at low temperature such as methylethyl ketone peroxide or cumene hydroperoxide.

The amount of peroxide required is a catalytic amount. This amount is generally at least 0.25 % by weight based on the combined weight of the urethane acrylates and the monomer, with a preferred lower limit of 0.5 % by weight. There is no theoritical upper limit but practical considerations, such as controlling the rate of cure and the cost of the initiator, suggest that it should not exceed 4.0 weight percent, with a preferred uper limit of 20 weight percent.

In the practice of this invention, at least about 25 %, preferably at least 50 % and more preferably at least about 70 %, of urethane acrylate, is mixed with at least about 10 %, preferably at least 20 % and more preferably at least 30 % of an alpha, beta-ethylenically unsaturated monomer in the presence of a catalytic amount of peroxide initiator. The individual reaction or curing conditions are not critical to this invention and accordingly, can vary widely. For reasons of convenience and economy, a temperature range of 20°C to 100°C, preferably 30°C to 90°C and more preferably 40°C to 80°C, may be used. For the same reasons the pressure may be from subatmospheric to superatmospheric, for example from near vacuum to 10 or more bars.

Preferably, the components of the reaction mass are continuously agitated to insure good mixing, and the curing is performed in conventional equipment. The resin can then cast by conventional techniques. The resins of this invention exhibits little shrinkage upon cure relative to the compositions based on very highly functional urethane acrylates, such as those taught in US-A-4,650,845.

The resin prepared by the process of this invention has superior ultraviolet light transmission properties. The resin can be molded by conventional molding techniques such as resin transfer molding, open molding or sheet cast molding. The resin can easily be molded directly into the desired shape or machined to achieve the desired tolerances, or thermoformed to the desired shape. The molding resins are tough and durable, and provide a wide range of properties depending upon the composition of the particular resin.

The molds of this invention are used in the same manner as conventional molds. In one embodiment, the molds are used in the preparation of rigid, fiber reinforcement preforms for use in making fiber reinforced molded articles. This method comprises applying a layer of reinforcing fibers coated with an ultraviolet light curable composition, the composition containing a photohardenable material under UV light and a polymerization photoinitiator, onto a surface of a preform mold made from the molding resins of this invention, which has a configuration corresponding to at least a portion of the final molding article. The coated fibers are then exposed to UV light to cure substantially all of the composition to form an essentially rigid preform, the UV light passed through the preform mold surface. In a similar manner, the molds of this invention can be used in the method of making fiber reinforcement mats. These and other methods of preparing reinforcement mat and fiber reinforcement preforms are more fully described in WO-A-91/10547.

The following examples 1,2,10 and 11 are an illustrative of the preparation of sheets which can be used as molds according to the invention. The other examples illustrate certain specific embodiments of this invention. Unless otherwise stated, all parts and percentages are by weight.

### EXAMPLE 1 (Preparation of a sheet, as raw material for the UV transparent mold)

A peroxide curable molding composition consisting of 70 parts of a urethane dimethacrylate oligomer (P-Cure® 29-1830, a product of Cook Composites and Polymers), 30 parts of styrene, and 1 part of bis-[4-t-butyl cyclohexyl]-peroxydicarbonate (Akzo Chemicals, Inc., Perkadox® 16) was cast between two glass plates into a sheet 30,5 cm x 30,5 cm X 0,32 cm. After curing the casting for 60 minutes at 70°C, physical properties were measured at 25°C and the UV-visible spectrum was determined for the range 200 nm to 500 nm with a Bechman Model Du-8 spectrophotometer. The casting was tough and durable. Physical properties are shown in Table I under the caption Resin A. The casting gave the spectral transmissions indicated in Table II.

### EXAMPLE 2 (Preparation of a sheet, as raw material for the UV transparent mold)

A peroxide curable molding composition consisting of 73.0 parts of urethane dimethacrylate oligomer (P-Cure® XR-29-A955-40, a product of Cook Composites and Polymers), 26 parts styrene and 1 part Perkadox® 16 was cast into a sheet and cured as in Example 1. UV Transmission was in the same ranges as Example 1. Physical properties are shown in Table I under the caption Resin B.

### EXAMPLE 3

The cast sheet of Example 1 was placed over 3 layers of continuous strand glass mat which had been treated with 5 % of epoxy acrylate UV curable binder (Nupol® XP-44-A908-97, a product of Cook Composites and Polymers). The binder was exposed to UV radiation from, a 400 watt mercury vapor lamp through the cast sheet. After 30 seconds UV exposure, the glass mat preform was rigid and held its shape, and odor of uncured monomer was absent.

### EXAMPLE 4

The procedure of Example 3 was followed with the cast sheet of example 2. The glass mat preform was rigid after 30 seconds exposure.

### EXAMPLE 5

The cast sheet of Example 1 was warmed in a 70°C oven. After 15 minutes heating, the sheet could easily be formed using low pressure. The warm sheet was formed halfway around a 7,6 cm diameter cylinder. After cooling to room temperature, the sheet maintained its 7,6 cm arc.

### EXAMPLE 6

A peroxide curable molding composition consisting of 70 parts P-Cure® 19-1830, 30 parts styrene and 1 part cumeme hydroperoxide was injected into a resin transfer flat panel mold measuring 45,7 cm x 45,7 cm x 0,32 cm and was demolded after holding for 30 minutes at 65°C.

Three layers of continuous strand glass mat treated with UV-curable preform binder were exposed through the molded panel to a 157 watt/cm mercury vapor lamp manufactured by Dr. Hoenle, GmbH, Germany. After a 20 second exposure, the glass was rigid, non-tacky, and odor of unreacted binder could not be detected (which was indicative that substantially all of the binder had cured).

### EXAMPLE 7

A peroxide curable molding composition consisting of 70 parts of a urethane triacrylate oligomer (P-Cure® XR-29-A831-04), 30 parts styrene and 1 part Perkadox 16 catalyst was cast into a cylindrical mold of 15,2 cm diameter and 1,9 cm height and cured for 45 minutes at 70°C. The place was machined to remove 1,27 cm and 0,64 cm sections in the center and the resulting piece was used as a forming tool to shape glass fiber reinforcement treated with UV-curable binder. In this manner 3 layers of treated glass mat were rigidized by exposure for 60 seconds to a single 157 watt/cm Hoenle UV lamp.

### EXAMPLE 8

The procedure of Example 7 was repeated with the composition of Example 1. After 60 seconds exposure to Uv light, 3 layers of UV binder treated glass mat were rigidized to make a preform for RTM molding.

### EXAMPLE 9

The urethane methacrylate molding composition of Example 6 was injected under low pressure into a heated resin transfer mold having cavity dimensions of 45.7 cm x 61 cm x 0.32 cm. The mold was maintained at 60°C for 40 minutes to allow for curing of the resin.

The molded part was used as a forming tool to shape UV-curable binder treated, 42,5 g continuous strand glass mat for making preforms. After exposing the UV-curable binder treated glass through the urethane acrylate mold for 10 seconds to 6000 watt UV lamp (Fusion Systems, Inc., 'V" bulb), the first 6 layers of glass were 100 % cured (ridigized), and the 7th layer was 60 % cured (partially rigidized).

When identically treated glass mat was exposed for 10 seconds to the 6000 watt UV light through 0,32 cm thick UVT grade acrylic sheet (a product of ROHM and HAAS), only 5 layers of glass were 100 % cured, the 6th layer 60 % cured, and the 7th layer about 30 % cured.

### EXAMPLE 10 (Preparation of a sheet, as raw material for the UV transparent mold)

A peroxide curable molding composition consisting of 69.3 parts of P-Cure 29-1898 (a product of Cook Composites and Polymers), 29.7 parts of styrene, 1 part of 2,5-dimethyl-2,5-bis(2-ethylhexanoyl peroxy) hexane and 0.5 parts of polyoxydimethyl silylene (A501, a product of Byk Chemie) was cast between two pieces of plate glass separated by a 0,32 cm spacer. The casting was placed into an oven held at 50°C for 20 minutes to remove entrapped air and then cured in a 100°C oven for 2 hours. A UV-visible spectrophotometric scan from 200 nm to 500 nm showed the spectral transmissions indicated in Table II.

### EXAMPLE 11 (Preparation of a sheet, as raw material for the UV transparent mold)

A peroxide curable casting composition consisting of 75 parts of P-Cure 29-1830, 25 parts methyl methacrylate and 1 part Perkadox 16 was cast between glass plates separated by a 0,32 cm thick spacer. The casting was cured for 60 minutes at 70°C. The casting was tough and flexible. Physical properties are shown in table I under Resin C. The casting gave the spectral transmissions indicated in table II.

**Table I**

| Resin | Thermoformed Acrylic UVT | A | B | C |
|---|---|---|---|---|
| Tensile strength (KN/m²) | 64.700 | 50.500 | 81.200 | 54.700 |
| Tensile modulus (KN/m²) | 2.550.000 | 1.987.000 | 3.491.000 | 2.058.000 |
| Tensile elongation (KN/m²) | 25 | 126 | 21 | 157 |
| Unnotched impact (g/cm) | 875 | 2140 | 320 | 1000 |
| Notched impact (g/cm) | 54 | 71 | 89 | 89 |

**Table II**

| % Transmission | | | | | |
|---|---|---|---|---|---|
| Spectral Range | UVT* | UVA* | Ex. 1 | Ex. 10 | Ex. 11 |
| > 400 nm | 90-93 | 92 | 75-78 | 80-87 | 80-83 |
| 350-400 nm | 90-93 | 0-92 | 60-75 | 64-80 | 60-80 |
| 320-350 nm | 87-90 | 0 | 38-60 | 42-64 | 25-60 |
| 280-320 nm | 0-87 | 0 | 0-38 | 0-42 | 2-25 |

| | | | | | |
|---|---|---|---|---|---|
| * UVT and UVA are different grades of Plexiglas® acrylic manufactured by Rohm & Haas. The UVA demonstrates good thermoform properties but transmits UV radiation over a limit spectral range. UVT demonstrates relatively poor thermoformability but transmits UV radiation over a greater spectral range. | | | | | |

## Claims

1. A UV transparent mold **characterized in that** it is made from a resin comprising in weight percent based on the total weight of the resin :
- at least 25% of a urethane acrylate ;
- at least 20% of an alpha, beta-ethylenically unsaturated monomer ; and
- a catalytic amount of a peroxyde initiator.

2. A mold according to claim 1, wherein the resin comprises at least 50% of the urethane acrylate.

3. A mold according to claim 1 or claim 2, wherein the urethane acrylate is a reaction product of:
A) at least one organic polyisocyanate compound ;
B) at least one alpha, beta-ethylenically unsaturated alcohol represented by the formula : 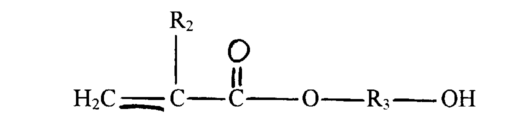 where R₂ is H or CH₃, and
R₃ is an alkylene group or a residue from a caprolactone; and
C) at least one polyhydric alcohol.

4. A mold according to any one of claims 1 to 3, wherein the peroxide initiator is present in an amount of at least 0.25% based on the combined weight of the urethane acrylate and the alpha, beta-ethylenicaily unsaturated monomer.

5. A mold according to any one of claims 1 to 4, wherein the peroxide initiator is used in combination with a co-catalyst.

6. A method of making a rigid, fiber reinforcement preform for use in making fiber reinforced molded articles, said method comprising the steps of:
- applying a layer of reinforcing fibers coated with an ultraviolet light curable composition which contains a photohardenable material polymerizable under UV light and a polymerization photoinitiator, onto a preform mold surface which has a configuration corresponding to at a least a portion of the final molded article, and
- exposing the coated fibers to UV light to cure substantially all of the composition to form an essentially rigid preform, the UV light being passed through the preform mold surface ;
**characterized by** using a mold according to claims 1 to 5.

7. A method of making a fiber reinforcement mat comprising the steps of:
- forming reinforcing fiber coated with an ultraviolet light curable composition which contains a photohardenable material polymerizable under UV light and a polymerization photoinitiator into a shaped structure on a preform mold surface, and
- exposing the coated fibers to UV light to cure substantially all of the composition whereby the fibers are bonded to one another to form a mat ;
**characterized by using** a mold according to claims 1 to 5.

## Patentansprüche

1. UV-durchlässige Form, dadurch gekennzeichnet, daß sie aus einem Harz, enthaltend, bezogen auf das Gesamtgewicht des Harzes:
- mindestens 25% eines Urethanacrylats,
- mindestens 20% eines alpha,beta-ethylenisch ungesättigten Monomers und
- eine katalytisch wirksame Menge eines Peroxid-Initiators,
besteht.

2. Form nach Anspruch 1, wobei das Harz mindestens 50% des Urethanacrylats enthält.

3. Form nach Anspruch 1 oder 2, wobei es sich bei dem Urethanacrylat um ein Umsetzungsprodukt aus:
A) mindestens einer organischen Polyisocyanatverbindung;
B) mindestens einem alpha,beta-ethylenisch ungesättigten Alkohol mit der Formel: 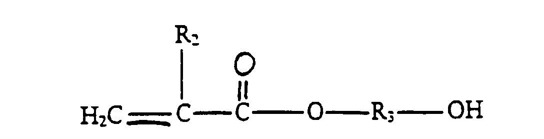 worin R₂ für H oder CH₃ und R₃ für eine Alkylengruppe oder einen von Caprolacton stammenden Rest steht; und
C) mindestens einem mehrwertigen Alkohol
handelt.

4. Form nach einem der Ansprüche 1 bis 3, wobei der Peroxid-Initiator in einer Menge von mindestens 0,25%, bezogen auf das Gesamtgewicht des Urethanacrylats und des alpha,beta-ethylenisch ungesättigten Monomers, vorliegt.

5. Form nach einem der Ansprüche 1 bis 4, wobei der Peroxid-Initiator zusammen mit einem Cokatalysator verwendet wird.

6. Verfahren zur Herstellung eines harten, Faserverstärkungsvorformlings zur Verwendung bei der Herstellung von faserverstärkten Formkörpern, bei dem man:
- eine Schicht aus Verstärkungsfasern, die mit einer UV-härtbaren Zusammensetzung, die ein photohärtbares, unter UV-Licht polymerisierbares Material und einen Polymerisationsinitiator enthält, beschichtet sind, auf eine Vorformfläche, die mindestens teilweise dem fertigen Formkörper entsprechend konfiguriert ist, aufbringt und
- die Zusammensetzung durch Bestrahlen der beschichteten Fasern mit UV-Licht im wesentlichen vollständig zu einem im wesentlichen harten Vorformling aushärtet, wobei man das UV-Licht durch die Vorformfläche hindurchschickt;
dadurch gekennzeichnet, daß man eine Form nach einem der Ansprüche 1 bis 5 verwendet.

7. Verfahren zur Herstellung einer Faserverstärkungsmatte, bei dem man:
- Verstärkungsfasern, die mit einer UV-härtbaren Zusammensetzung, die ein photohärtbares, unter UV-Licht polymerisierbares Material und einen Polymerisationsinitiator enthält, beschichtet sind, auf einer Vorformfläche zu einem Formgebilde formt und
- die Zusammensetzung durch Bestrahlen der beschichteten Fasern mit UV-Licht im wesentlichen vollständig aushärtet, wodurch die Fasern miteinander verbunden werden und eine Matte bilden;
dadurch gekennzeichnet, daß man eine Form nach einem der Ansprüche 1 bis 5 verwendet.

## Revendications

1. Moule transparent aux UV, caractérisé en ce qu'il est fabriqué à partir d'une résine comprenant en pour cent en poids sur la base du poids total de la résine:
- au moins 25% d'un uréthanne-acrylate;
- au moins 20% d'un monomère alpha, bêta-éthyléniquement insaturé; et
- une quantité catalytique d'un amorceur peroxyde.

2. Moule selon la revendication 1, dans lequel la résine comprend au moins 50% de l'uréthanne-acrylate.

3. Moule selon la revendication 1 ou la revendication 2, dans lequel l'uréthanne-acrylate est un produit de réaction de:
A) au moins un composé polyisocyanate organique;
B) au moins un alcool alpha, bêta-éthyléniquement insaturé représenté par la formule: 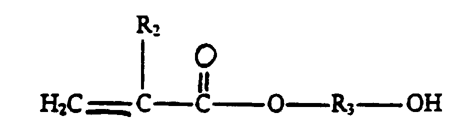 dans laquelle R₂ est H ou CH₃, et
R₃ est un groupe alkylène ou un radical d'une caprolactone; et
C) au moins un alcool polyhydrique.

4. Moule selon l'une quelconque des revendications 1 à 3, dans lequel l'amorceur peroxyde est présent en une quantité d'au moins 0,25%, sur la base du poids combiné de l'uréthanne-acrylate et du monomère alpha, bêta-éthyléniquement insaturé.

5. Moule selon l'une quelconque des revendications 1 à 4, dans lequel l'amorceur peroxyde est utilisé en combinaison avec un co-catalyseur.

6. Procédé de fabrication d'une préforme rigide à renforcement fibreux destinée à être utilisée pour la fabrication d'articles moulés renforcés par des fibres, ledit procédé comprenant les étapes consistant à:
- appliquer une couche de fibres de renforcement revêtues d'une composition durcissable à la lumière ultraviolette qui contient un matériau photodurcissable polymérisable sous la lumière UV et un photoamorceur de polymérisation, sur une surface de moule de préforme ayant une configuration correspondant à au moins une portion de l'article moulé final, et
- exposer les fibres revêtues à la lumière UV pour durcir substantiellement la totalité de la composition en vue de former une préforme essentiellement rigide, la lumière UV étant passée à travers la surface de moule de préforme;
caractérisé par l'utilisation d'un moule selon les revendications 1 à 5.

7. Procédé de fabrication d'un mat à renforcement fibreux comprenant les étapes consistant à:
- former des fibres de renforcement revêtues d'une composition durcissable à la lumière ultraviolette qui contient un matériau photodurcissable polymérisable sous la lumière UV et un photoamorceur de polymérisation, en une structure mise en forme sur une surface de moule de préforme, et
- exposer les fibres revêtues à la lumière UV pour durcir substantiellement la totalité de la composition, les fibres étant ainsi liées les unes aux autres pour former un mat;
caractérisé par l'utilisation d'un moule selon les revendications 1 à 5.
